## Europäisches Patentamt

## European Patent Office

## Office européen des brevets

(19)

(11) Publication number: **0 120 113**
**A1**

(12) **EUROPEAN PATENT APPLICATION**

(21) Application number: **83106564.4**

(22) Date of filing: **05.07.83**

(51) Int. Cl.³: **B 07 C 5/02**
**B 07 C 5/342**
**//B65G11/20**

(30) Priority: **09.02.83 JP 20912/83**

(43) Date of publication of application:
**03.10.84 Bulletin 84/40**

(84) Designated Contracting States:
**CH DE IT LI NL**

(71) Applicant: **SATAKE ENGINEERING CO., LTD.**
**19-10, Ueno 1-chome**
**Taito-ku Tokyo 110(JP)**

(72) Inventor: **Satake, Toshihiko**
**2-38, Saijonishihonmachi**
**Higashihiroshima-shi(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Sorting apparatus.**

(57) A sorting apparatus for separating a first granular material having a desired color and a second granular material having a color distinct from the desired color one from the other includes a feeder for feeding a mixture of the first and second granular materials to an upstream end (11) of each of a plurality of chutes (10). The mixture flows downwardly by its own weight along each chute while being accelerated by gravity and is discharged from the downstream end (13) of the chute (10) so as to describe a predetermined path of travel (29). A photoelectric detector (59) detects the second granular material flowing along the predetermined path of travel to generate a detecting signal. A separator (69) is operative in response to the detecting signal to deflect the second granular material from the predetermined path of travel. A vibrator unit (99) vibrates each chute (10) to cause individual granules of the mixture to flow downwardly along the chute at substantially the same changing rate of speed.

FIG. 3

SORTING APPARATUS

BACKGROUND OF THE INVENTION

Field of the Invention

The present invention relates to a sorting apparatus for seperating a first granular material having a desired color and a second granular material having a color distinct from the desired color one from the other. The present invention is suitably aplicable to the sorting of granular materials, such as rice, beans, pellets of synthetic resinous materials, etc.

Description of the Prior Art

A sorting apparatus of the kind referred to above is disclosed in Japanese Patent Publication No. 25265/79, for example. Such sorting apparatus comprises a chute having an upstream end and a downstream end with a mixture of first and second granular materials flowing therealong by its own weight while being accelerated by gravity and being discharged from the downstream end so as to describe a predetermined path of travel, a feeder for feeding the mixture to the upstream end of the chute, a photoelectric detecting device disposed in facing relation to the predetermined path of travel for detecting the second granular material to generate a detecting signal, and a separating device operative in response to the detecting signal to deflect the second granular material from the predetermined path of travel.

In the sorting apparatus of the aforesaid construction of the prior art, individual granules of the mixture fed to the upstream end of the chute from the feeder do not necessarily flow downwardly along the chute at the same changing rate of speed. More specifically, the individual granules of the mixture fed to the upstream end of the chute flow downwardly along the chute under gravitational acceleration, but, since the force of friction exerted on the individual granules by an inner surface or contact surface of the chute is not uniform, they are prevented from flowing downwardly along the chute at the same changing rate of speed. The individual granules are distinct from one another delicately in size, weight, shape, surface roughness, etc., even if they are of the same type, to say nothing of the granules of different types. Thus, the individual granules would have forces of friction of different magnitude applied thereto by the contact surfce of the chute. Accordingly, even if the amount of the mixture fed to the upstream end of the chute by the feeder is continuously constant, the individual granules of the mixture would not flow at a constant speed along the chute, so that the granules flowing downwardly in a stream would be dense in some areas and coarse in other areas of the inner surface of the chute. This would make it impossible for the photoeletric detecting device to accurately detect the individual granules. Should the photoelectric detecting device detect the granules of the second granular material that should be deflected from the predetermined path of travel, the separating device would be prevented from acting in good timing to deflect them from the predetemined path of travel. This is conducive to a deterioration in the precision and accuracy with which sorting is carried out and a reduction in the performance of the sorting apparatus.

SUMMARY OF THE INVENTION

The present invention has as its object the provision of a sorting apparatus having improved precision and accuracy with which sorting is carried out and increased performance in effecting sorting.

According to the invention, there is provided a sorting apparatus for separating a first granular material having a desired color and a second granular material having a color distinct from the desired color one from the other, comprising chute means having an upstream end and a downstream end, said chute means allowing a mixture of the first and second granular materials to flow downwardly therealong by its own weight while being accelerated by gravity and to be discharged from the downstream end so as to describe a predetermined path of travel, means for feeding the mixture to the upstream end of the chute means, photo-eletic detecting means disposed in facing relation to the predetermined path of travel, for detecting the second granular material flowing along the predetermined path of travel to generate a detecting signal, and separating means operative in response to the detecting signal to deflect the second granular material from the predetermined path of travel, characterized in that the chute means comprises at least a vibratory chute, and that vibrating means is provided for vibrating the vibratory chute to cause individual granules of the mixture to flow downwardly along the  vibratory chute at substantially the same changing rate of speed.

BRIEF DESCRIPTION OF THE DRAWINGS

Fig. 1 is a front view of an entire sorting apparatus in accordance with an embodiment of the present invention;

Fig. 2 is a sectional view taken along the line II-II in Fig. 1;

Fig. 3 is a fragmentary sectional view, on an enlarged scale, of a portion of the sorting apparatus shown in Fig. 2;

Fig. 4 is a plan view of a chute shown in Figs. 2 and 3;

Fig. 5 is a fragmentary sectional view, on an enlarged scale, similar to Fig. 3, but showing a sorting apparatus in accordance with another embodiment of the present invention; and

Fig. 6 is a plan view of a modification of the chute shown in Fig. 4.

DETAILED DESCRIPTION OF THE PREFERRED EMBODIMENTS

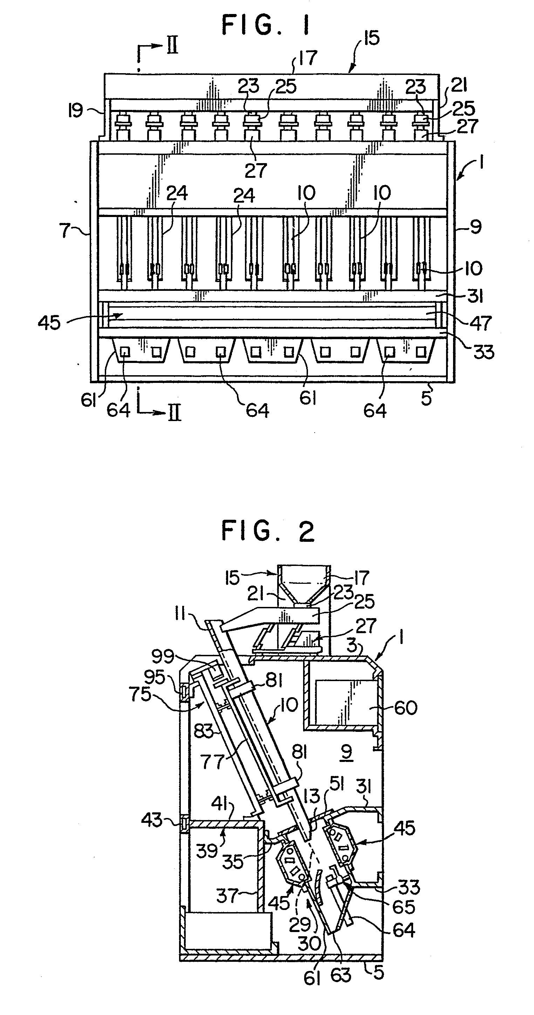

Referring to Figs. 1 and 2, one embodiment of the sorting apparatus according to the invention comprises a main frame generally designated by the reference numeral 1 including a top wall 3, a bottom wall 5 and side walls 7 and 9 facing each other. A plurality of elongated inclined chutes 10 each having an upstream end 11 and a downstream end 13 as subsequently to be described are mounted on the main frame 1 while they are maintained in spaced-apart parallel relation to each other. A mixture of a granular material having a desired color and a granular material having a color distinct from the desired color, such as cereals, is fed to the upsream end 11 of each of the chutes 10 by a feeding device 15 which comprises a common hopper 17 supported by brackets 19 and 21 on the top wall 3 of the main frame 1, vibratory chutes 25 each having an upstream end in communication with the associated one of discharge ports 23 in the common hopper 17 and a downstream end in communication with the upstream end 11 of the associated chute 10 for feeding the mixture of granular materials to the upper ends 11 of the chutes 10 from the common hopper 17 through the respective discharge ports 23, and a vibrator assembly 27 mounted on the top wall 3 of the main frame 1 for causing the associated vibratory chute 25 to vibrate.

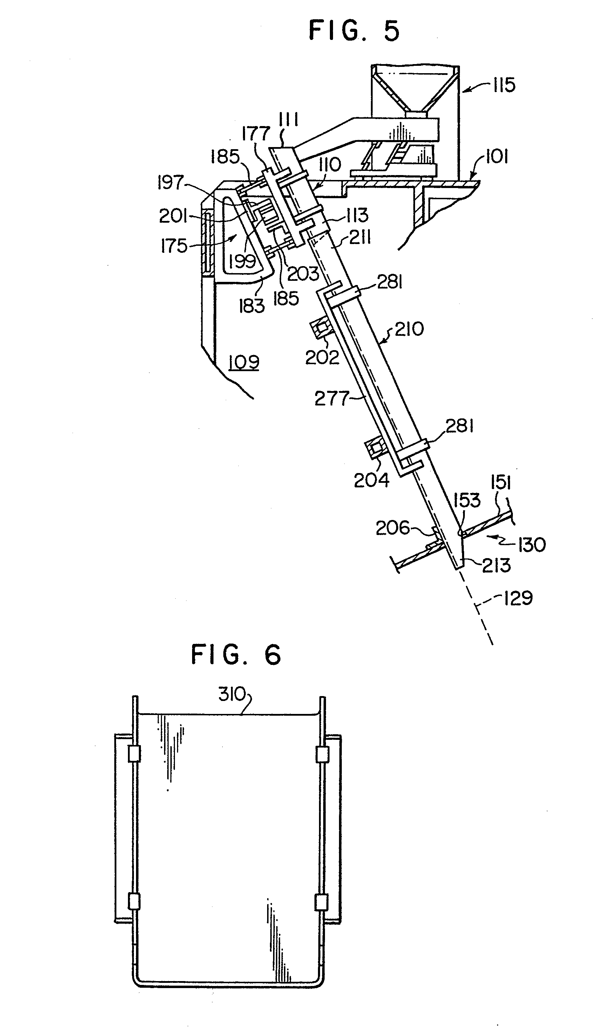

As shown in Fig. 4, each chute 10 has a generally U-shaped cross-section. The mixture of granular materials fed by the feeding device 15 to the upstream end 11 of each of the chutes 10 flows along the chutes 10 by its own weight in a single stream while being accelerated by gravity, so that the mixture is discharged from the downstream end 13 of the chute 10 so as to describe a predetermined path of travel 29.

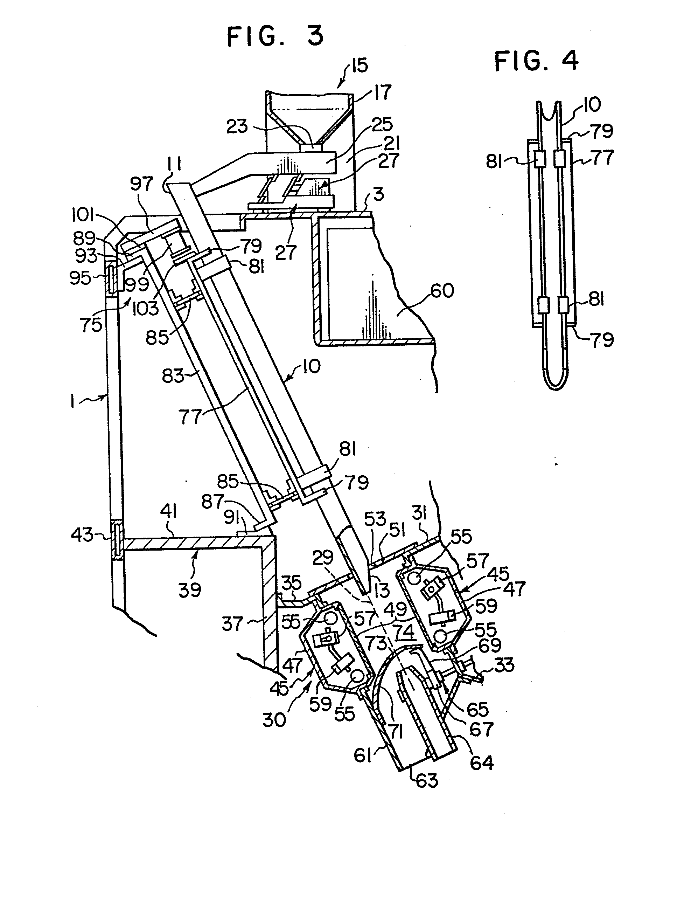

A photoelectric detecting and separating device generally designated by the reference numeral 30 for detecting the granular mateiral of the distinct color flowing along the predetermined path of travel 29 to deflect the granular material of the distinct color from the predetermined path of travel comprises a frame assembly fixedly mounted on the main frame 1, which includes a front upper frame member 31, a front lower frame member 33 and a rear frame member 35. The rear frame member 35 is secured to a vertical leg 37 of a bracket 39 having an L-shaped cross section. A horizontal leg 41 of the bracket 39 is secured to a cross beam 43 extending between the side walls 7 and 9 of the main frame 1 and secured thereto. As shown in detail in Fig. 3, a pair of photoelectric detecting assemblies 45 of substantially the same construction each comprise a housing 47 having a generally C-shaped cross-section and extending over the substantially entire length of the frame members 31 and 35, and a transparent plate 49 for closing an open side of the housing 47. The housing 47 of one of the pair of photoelectric detecting assemblies 45 is removably mounted on the frame members 31 and 33, and the housing 47 of the other photoelectric detecting assembly 45 is removably mounted on the frame member 35. As is clearly shown in Fig. 3, a cover plate 51 formed therein with opening 53 extends between the frame members 31 and 35 and is fastened thereto. The downstream end 3 of each chute 10 is loosely inserted in the associated opening 53 in the cover plate 51.

As can be seen from Fig. 3, the pair of photoelectric detecting assemblies 47 are located in such a manner that transparent plates 49 thereof are in spaced and facing relation to each other with respect to the predetermined path of travel 29 interposed therebetween. Each photoelectric detecting assembly 47 contains therein elongated fluorescent tubes 55, a background 57 and a light receiving element 59 for each chute 10. The background 57 and the light receiving element 59 are directed against the predetermined path of travel 29. The light receiving element 59 of one of the photoelectric detecting assemblies 47 is maintained in alignment with the background 57 of the other photoelectric

0120113

detecting assembly 47. The light receiving elements 59 are electrically connected to a controller 60 through leads, not shown, and detect the granular material of the distinct color to generate detecting signals which are fed into the controller 60.

Each of bottom frame members 61 formed with an opening 63 for discharging the granular material of the distinct color is mounted on the housing 47 of the photoelectric detecting assembly 47 on the left side in Fig. 3 and the front lower frame member 33. Collection tubes 64 are secured to the bottom frame member 61 each in precise alignment with the associated predetermined path of travel 29 to collect the granular material of the desired color.

A separating device 65 for deflecting the granular material of the distinct color from the predetermined path of travel 29 comprises electromagentic valves 67 each secured to the associated collection tube 64, and nozzles 69 each connected to the associated electromagnetic valve 67. The electromagnetic valves 67 are electrically connected to the controller 60 and opened in response to operation signals issued from controller 60 based on the detecting signals from the light receiving elements 59, to bring the nozzles 69 into communication with a compressed air source, not shown, so that air jets are injected from the nozzles 69 against the granular material of the distinct color flowing along the predetermined path of travel 29, thereby to deflect the granular material of the distinct color from the predetermined path of travel 29. The deflected granular material of the distinct color flows under a baffle 71 formed with openings 73 each of which is in alignment with the associated predetermined path of travel 29, and is discharged through openings 63 to outside. A photoelectric detecting chamber 74 is defined by the pair of photoelectric detecting assemblies 45, the cover plate 51 and the baffle 71.

A vibration device 75 associated with each chute 10 for vibrating the same includes a support member 77 formed with a riser 79 at either end thereof. Each riser 79 has a U-shaped groove for fitting the chute 10 therein. A pair of retainers 81 retains the chute 10 to the support member 77. The support member 77 is connected to a frame member 83 through a pair of plate springs 85, with the frame member 83 having flanges 87 and 89 at opposite ends thereof. The lower flange 87 is secured to the horizontal leg 41 of the bracket 39 through a fixing member 91, and the upper flange 89 is secured to a bracket 93 secured to a beam 95 which extends between the side walls 7 and 9 of the main frame 1 and is secured thereto. A base member 97 on which is fixedly mounted one end of an oscillator 99 is mounted on the upper flange 89 of the frame member 83 through a vibration damping member 101, and an abutment plate 103 is secured to the support member 77 in a position facing the other end of the oscillator 99.

In operation, a mixture of a granular material of a desired color and a granular material of a color distinct from the desired color is fed from the common hoper 17 to the vibratory chutes 25 from which the mixture is gradually supplied in suitable amount to the upstream ends 11 of the chutes 10 by the vibratory action of the vibrator 27. When the mixture fed to the upstream end 11 of each chute 10 flows downwardly therealong, the chute 10 is subjected to a composite or resultant vibration composed of a longitudinal vibration component and a transverse vibration component with respect to the predetermined path of travel 29, so that the force with which individual granules of the mixture are maintained in contact with an inner surface of the chute 10 is weakened and the individual granules flow along the chute 10 substantially at the same changing rate of speed without essentially being influenced by the force of friction acting between the granules and the inner surface of the chute 10. This is attributed to the fact that each individual granule tends to maintain its position on the inner surface of the chute 10 by its own inertia in spite of the fact that the chute 10 is vibrated. The mixture discharged from the downstream end 13 of each chute 10 and flowing along the predetermined path of travel 29 is illuminated by light emanating from the fluorescent lamps 55, and the light receiving elements 59 monitor the flowing mixture while comparing the color of the mixture with the backgrounds 57 and supply detecting signals moment by moment to the controller 60. When the detecting signals from the light receiving elements 59 are not within a preset range or when the light receiving elements 59 detect granular material having a color out of a preset range or a color distinct from the desired color, the controller 60 supplies actuation signals to the electromagnetic valves 67 concerned to open the same to cause air jets to be directed through the associated nozzles 69 against the granular material of the distinct color, to deflect the granular material of the distinct color from the predetermined path of travel 29 and discharge the same through the openins 63. The granular material having its color within a preset or a desired color flows along the predetermined path of travel 29 without being subjected to the air jets and is collected together at the next following station after passing through the collection tubes 64.

Although it has been described that the chutes 10 are subjected to a resultant vibration of longitudinal and transverse vibration components by means of the vibration device 75, the chutes 10 may be subjected to a longitudinal vibration alone, or a transverse vibration alone.

- 12 -

0120113

In another embodiment shown in Fig. 5 in which parts similar to those shown in Fig. 1 are designated by adding 100 to the numerals by which they are shown in Fig. 1, a stationary chute 210 is located at a downstream end 113 of each of the chutes 110 with which a vibration device 175 is associated. Each stationary chute 210 which constitutes an extension of the associated chute 110 has an upstream end 211 communicated with the downstream end 113 of the vibratory chute 110 and a downstream end 213 fittd in an opening 153 formed in a cover plate 151 and secured in place by an angle plate 206. Each stationary chute 210 is supported by a support by a support member 277 and held in place by a pair of retainers 281. Each support member 277 is fixedly mounted by a pair of beams 202 and 204 extending between side walls (only one 109 of such side walls being shown) and secured thereto. Thus, each of the stationary chute 210 is secured in place to a photoelectric detecting and separating device 130.

The vibration device 175 for each chute 110 comprises a support member 177, a frame member 183, a resilient member 185, a base member 197, an oscillator 199, a vibration damping member 201 and an abutment plate 203. The structural relation of these parts, their funcitons and operations shall not be repeated because they are believed to be apparent from the description made hereinabove by referring to Figs. 1-3.

The embodiment shown in Fig. 5 is advantageous in that the vibration device 175 for each chute 110 is compact in size.

In place of each of the chutes 10, 110, 210 decribed by referring to the embodiments shown in Figs. 1-5, a chute 310 shown in Fig. 6 may be used that has a width large enough to allow a mixture of granular materials of different colors to flow therealong in a plurality of spaced parallel streams.

The invention is not limited to the vibration device 75, 175 for the chutes 10, 110 of the type described by referring to Figs. 1-5, and any known type of vibration device may be used.

From the foregoing description, it will be appreciated that the individual granules of the mixture of granular materials fed by the chutes 10, 110 according to the invention are substantially impervious to the influences exerted by frictional contact thereof with the inner surfaces of the chutes and flow downwardly along the chutes 10, 110 at substantially the same changing rate of speed, to clear the chutes 10, 110 at their downstream ends to flow along the predetermined path of travel 29, 129. This permits the individual granules to be accurately sorted by the photoelectric detecting and separating device 30, 130 so that the sorting apparatus according to the invention can have increased precision and improved performance in effecting sorting.

0120113

WHAT IS CLAIMED IS:

1.    A sorting apparatus for separating a first granular material having a desired color and a second granular material having a color distinct from the desired color one from the other, comprising:

chute means having an upstream end and a downstream end for allowing a mixture of said first and second granular materials to flow downwardly therealong by its own weight while being accelerated by gravity and to be discharged from the downstream end of said chute means so as to describe a predetermined path of travel;

means for feeding the mixture to the upstream end of said chute means;

photoelectric detecting means disposed in facing relation to said predetermined path of travel, for detecting the second granular material flowing along the predetermined path of travel to generate a detecting signal;

separating means operative in response to the detecting signal to deflect the second granular material from the predetermined path of travel, characterized in

that said chute means comprises at least a vibratory chute, and vibrating means is provided for vibrating said vibratory chute to cause individual granules of the mixture to flow downwardly along the vibratory chute at substantially the same changing rate of speed.

2.     A sorting apparatus as claimed in claim 1, characterized in that said chute means comprises, in addition to said vibratory chute, a stationary chute, said stationary chute having an upstream end in communication with said downstream end of said vibratory chute and a downstream end located adjacent said photoelectric detecting means to form an extension of siad vibratory chute.

3.     A sorting apparatus as claimed in claim 1 or 2, characterized in that said chute means has such a width that said mixture flows in a single stream along said chute means.

4.     A sorting apparatus as claimed in claim 1 or 2, characterized in that said chute means has a width large enough to permit said mixture to flow therealong in a plurality of spaced parallel streams.

5.     A sorting apparatus as claimed in claim 1 or 2, characterized by further comprising a main frame, and wherein said vibrating means comprises a support member for supporting said vibrating chute, resilient means for connecting said support member to said main frame, and a vibrator unit for causing said support member to vibrate to thereby cause the vibratory chute to be subjected to any one of a longitudinal vibration, a transverse vibration, and a resultant vibration of longitudinal and transverse vibration components.

6.     A sorting apparatus as claimed in claim 5, characterized in that said vibrator unit comprises an oscillator fixedly mounted on said main frame through a vibration damping material, and an abutment plate secured to said support member in a position facing said oscillator.

7.        A sorting apparatus as claimed in claim 6, characterized in that said photoelectric detecting means comprises an auxiliary frame secured to said main frame, and that said separating means comprises a jet nozzle secured to said auxiliary frame, said jet nozzle being operative in response to the detecting signal to inject a jet against said predetermined path of travel to deflect said second grnular material from the predetemined path of travel.

8.        A sorting apparatus as claimed in claim 7, characterized in that said photoelectric detecting means comprises a pair of photoelectric detecting units, each of said pair of photoelectric detecting units comprising a light source, a background and a light receiving element in alignment with said background, said background and said light receiving element being located in face-to-face relation with respect to said predetermined path of travel.

9.        A sorting apparatus as claimed in claim 1 or 2, characterized in that said mixture of granular materials comprises any one of rice, beans and plastic pellets.

# FIG. 1

# FIG. 2

# FIG. 3

# FIG. 4

## FIG. 5

## FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 033 881 (GUNSON'S SORTEX LTD.) <br> * Figure 1; abstract; page 1, lines 5-9, 32-56; page 1, line 103 - page 2, line 41; claim 1 * | 1,3,5, 7-9 | B 07 C 5/02 <br> B 07 C 5/342// <br> B 65 G 11/20 |
| Y | FR-A-2 194 490 (OBERMAIER) <br> * Figures 1,2; page 1, line 15 - page 2, line 4 * | 1,3,5 | |
| A | FR-A-2 353 839 (ROBERT BOSCH GmbH) | 1 | |
| A | FR-A-2 021 068 (FRIEDRICH UHDE GmbH) | 1 | |

TECHNICAL FIELDS SEARCHED (Int. Cl. ³)

B 07 C
B 65 G

The present search report has been drawn up for all claims

| Place of search | Date of completion of the search | Examiner |
|---|---|---|
| THE HAGUE | 17-05-1984 | PESCHEL W. |